# EUROPÄISCHE PATENTSCHRIFT

(11) **EP 3 569 775 B1**
(45) Veröffentlichungstag und Bekanntmachung des Hinweises auf die Patenterteilung: **20.01.2021**
(21) Anmeldenummer: 19171254.6
(22) Anmeldetag: 26.04.2019
(51) Int. Cl.: E02F 9/22, B60T 10/04, F16H 61/4157, F16H 61/4165

(54) **HYDRAULISCHE ANORDNUNG MIT RETARDERFUNKTION UND FAHRANTRIEB DAMIT**
HYDRAULIC ASSEMBLY WITH RETARDER FUNCTION AND DRIVE HAVING THE SAME
AGENCEMENT HYDRAULIQUE À FONCTION DE RALENTISSEUR ET ENTRAINEMENT COMPORTANT UN TEL AGENCEMENT

(30) Priorität: 09.05.2018 DE 102018207235
(43) Veröffentlichungstag der Anmeldung: 20.11.2019
(73) Patentinhaber: Robert Bosch GmbH, 70442 Stuttgart (DE)
(72) Erfinder: Mast, Michael, 88433 Schemmerhofen (DE); Lenzgeiger, Ulrich, 86424 Dinkelscherben (DE)

(56) Entgegenhaltungen:
- EP-B1- 2 399 861
- DE-A1- 10 041 961
- GB-A- 1 533 902
- US-A1- 2010 050 620
- US-B1- 6 202 783

## Beschreibung

Die Erfindung betrifft eine hydraulische Anordnung mit einer Retarderfunktion bzw. mit einer hydraulischen Bremsfunktion gemäß dem Oberbegriff des Patentanspruchs 1 und einen Fahrantrieb mit einer derartigen hydraulischen Anordnung.

Bei mobilen Arbeitsmaschinen oder Nutzfahrzeugen ist es bekannt, hydrostatische Fahrmotoren und weitere hydrostatische Verbraucher, die unter dem Begriff Arbeitshydraulik zusammengefasst werden, über eine in ihrem Hubvolumen verstellbare Pumpe zu versorgen, die von einem Verbrennungsmotor angetrieben wird. Ein weiterer Verbraucher kann z.B. ein Hubwerk eines Radladers sein, der Verbrennungsmotor ist meistens ein Dieselmotor.

Wenn nun die Fahrt des Fahrzeugs gebremst werden soll, kann das Schleppmoment des Verbrennungsmotors genutzt werden. Wenn dieses nicht ausreicht, wird bei hydraulischen Anordnungen gemäß dem Stand der Technik eine Retarderfunktion bzw. hydraulischen Bremsfunktion aktiviert, bei der von der Pumpe gefördertes Druckmittel über eine Retarderdrossel abgeführt wird, wodurch die Pumpe ein zusätzliches Bremsmoment aufbringt. Die Bremsenergie wird von der Retarderdrossel in Wärme umgewandelt.

In der Druckschrift DE 100 41 961 A1 ist eine derartige hydraulische Anordnung mit Retarderfunktion mit für eine Erdbewegungsmaschine wie z.B. einen Radlader offenbart.

Die Druckschrift EP 2 399 861 B1 zeigt einen Verbrennungsmotor mit einer hydraulischen Anordnung, wobei eine verstellbare Fahrpumpe für einen Fahrantrieb und eine weitere verstellbare Pumpe von dem Verbrennungsmotor angetrieben wird. Die weitere

Pumpe versorgt die Verbraucher einer Arbeitshydraulik und eine hydraulische Lenkung, die priorisiert werden kann. Die hydraulische Anordnung weist eine Retarderfunktion auf. Dazu wird das von der weiteren verstellbaren Pumpe geförderte Druckmittel über eine Retarderdrossel abgeführt. So wird dem Verbrennungsmotor bzw. der Fahrpumpe, die im Bremsbetrieb als Motor wirkt, ein Zusatzbremsmoment zu Verfügung gestellt.

Nachteilig an derartigen hydraulischen Anordnungen ist, dass das Zusatzbremsmoment nicht verstellbar ist. Um eine Verstellbarkeit des Zusatzbremsmoments zu erreichen ist es aus der US6,202,783 B1 bekannt, eine verstellbare Retarderdrossel zu verwenden.

Nachteilig an der letztgenannten hydraulischen Anordnung ist der vorrichtungstechnische Aufwand.

Dem gegenüber liegt der Erfindung die Aufgabe zu Grunde, eine hydraulische Anordnung mit einer Verstellpumpe und einen entsprechenden Fahrantrieb zu schaffen, deren vorrichtungstechnischer Aufwand verringert ist.

Diese Aufgabe wird gelöst durch eine hydraulische Anordnung mit den Merkmalen des Patentanspruchs 1 und durch einen Fahrantrieb mit den Merkmalen des Patentanspruchs 12.

Weitere vorteilhafte Ausgestaltungen der Erfindung sind in den abhängigen Patentansprüchen beschrieben.

Die beanspruchte hydraulische Anordnung weist eine Verstellpumpe auf, die von einem Verbrennungsmotor eines Fahrzeugs antreibbar ist. An oder in einer Arbeitsleitung der hydraulischen Anordnung, die an die Verstellpumpe angeschossen ist, ist ein Retarderventil angeordnet. Über das Retarderventil ist von der Verstellpumpe gefördertes Druckmittel zu einer Retarderdrossel abführbar bzw. dorthin steuerbar. Damit ist die hydraulische Anordnung in einem Retarderbetrieb als hydraulische Bremse nutzbar. Erfindungsgemäß ist die Retarderdrossel in ihrem Durchmesser fix, wobei ein Pumpendruck und/oder ein Pumpenvolumenstrom in der Arbeitsleitung im Retarderbetrieb steuerbar oder regelbar sind/ist. Mit dem Pumpenvolumenstrom und dem Druckabfall an der fixen Retarderdrossel ergibt sich eine steuerbare oder regalbare Verlustleistung und damit ein steuerbares oder regelbares Zusatzbremsmoment der erfindungsgemäßen hydraulischen Anordnung im Retarderbetrieb.

Vorrichtungstechnisch besonders einfach ist es, wenn das Retarderventil ein Schaltventil mit zwei Schaltstellungen ist.

Vorzugsweise sind/ist der Pumpendruck und/oder der Pumpenvolumenstrom im Retarderbetrieb elektronisch steuerbar oder regelbar.

Dazu dient vorzugsweise eine elektronische Steuereinheit.

Bei einer bevorzugten Weiterbildung der erfindungsgemäßen hydraulischen Anordnung ist in der elektronischen Steuereinheit ein Kennfeld hinterlegt, in dem der Pumpendruck und/oder der Pumpenvolumenstrom in Abhängigkeit von einer Drehzahl der Verstellpumpe oder des Verbrennungsmotors und in Abhängigkeit eines Zusatzbremsmomentes hinterlegt sind/ist. Damit ergibt sich beispielsweise eine mehrstufige oder stufenlos geregelte Retarderfunktion. Die Abhängigkeit von Drehzahl des Verbrennungsmotors kann z.B. eine Drehzahlgrenze sein, ab der die erfindungsgemäße Retarderfunktion automatisch zugeschaltet wird, damit der Verbrennungsmotor nicht überdreht. Das Zusatzbremsmoment der Retarderfunktion oder ein Gesamtbremsmoment einschließlich des Motorbremsmoments des Verbrennungsmotors kann über eine Bedienerschnittstelle an die elektronische Steuereinheit übermittelbar sein.

Die Retarderdrossel kann in dem Retarderventil oder stromab des Retarderventils angeordnet sein.

Wenn der Pumpendruck im Retarderbetrieb steuerbar oder regelbar ist, weist die Verstellpumpe vorzugsweise einen elektrohydraulischen Druckregler (ED-Regler) auf. Ist der Volumenstrom steuerbar oder regelbar, dann weist die Verstellpumpe vorzugsweise einen elektrohydraulischen Schwenkwinkelregler (EP-Regler) auf.

Bei einer bevorzugten Weiterbildung ist eine Arbeitshydraulik vorgesehen, die zumindest einen Verbraucher aufweist, der von der Verstellpumpe über die Arbeitsleitung versorgbar ist.

Wenn die Retarderdrossel und ein Steuerventil eines Verbrauchers in Reihe geschaltet sind, kann im Retarderbetrieb das Druckmittel zunächst durch die Retarderdrossel strömen und danach noch einen Verbraucher versorgen.

Vorzugsweise geht der Druck des lasthöchsten Verbrauchers in die Steuerung oder Regelung der Verstellpumpe im Sinne eines Load-Sensing mit ein. Bei einer besonders bevorzugten Weiterbildung ist dies ein elektronisches Load Sensing.

Der erfindungsgemäße Fahrantrieb für ein Fahrzeug weist einen Verbrennungsmotor auf, an den eine Verstellpumpe einer vorbeschriebenen hydraulischen Anordnung gekoppelt ist. Damit sind der Verbrennungsmotor und der Fahrantrieb und damit das betroffene Fahrzeug über die Retarderfunktion bremsbar.

Gemäß einer ersten Weiterbildung weist der Fahrantrieb einen hydraulischen Antriebsstrang auf. Dieser hat einen geschlossenen hydraulischen Kreis und zumindest einen hydrostatischen Fahrmotor. Der oder die Fahrmotoren werden von einer speziellen Fahrpumpe des Fahrantriebs über den geschlossenen hydraulischen Kreis versorgt.

Gemäß einer zweiten Weiterbildung weist der Fahrantrieb einen mechanischen Abtriebsstrang auf. Dabei kann an den Verbrennungsmotor statt des geschlossenen hydraulischen Kreises mit dem zumindest einen Fahrmotor ein mechanisches Getriebe gekoppelt sein.

Das Fahrzeug kann eine mobile Arbeitsmaschine, z.B. ein Radlader, oder ein Nutzfahrzeug, z.B. ein LKW sein.

Mehrere Ausführungsbeispiele der erfindungsgemäßen hydraulischen Anordnung sind in den Figuren dargestellt.

Es zeigen
Figur 1 ein Schaltbild des erfindungsgemäßen Fahrantriebs gemäß einem ersten Ausführungsbeispiel,
Figur 2 ein Schaltbild des erfindungsgemäßen Fahrantriebs gemäß einem zweiten Ausführungsbeispiel,
Figur 3 verschiedene Zusatzbremsmomente der erfindungsgemäßen hydraulischen Anordnung, deren Verstellpumpe im Retarderbetrieb eine Pumpendruckregelung aufweist, und
Figur 4 verschiedene Zusatzbremsmomente der erfindungsgemäßen hydraulischen Anordnung, deren Verstellpumpe im Retarderbetrieb eine Volumenstromregelung aufweist.

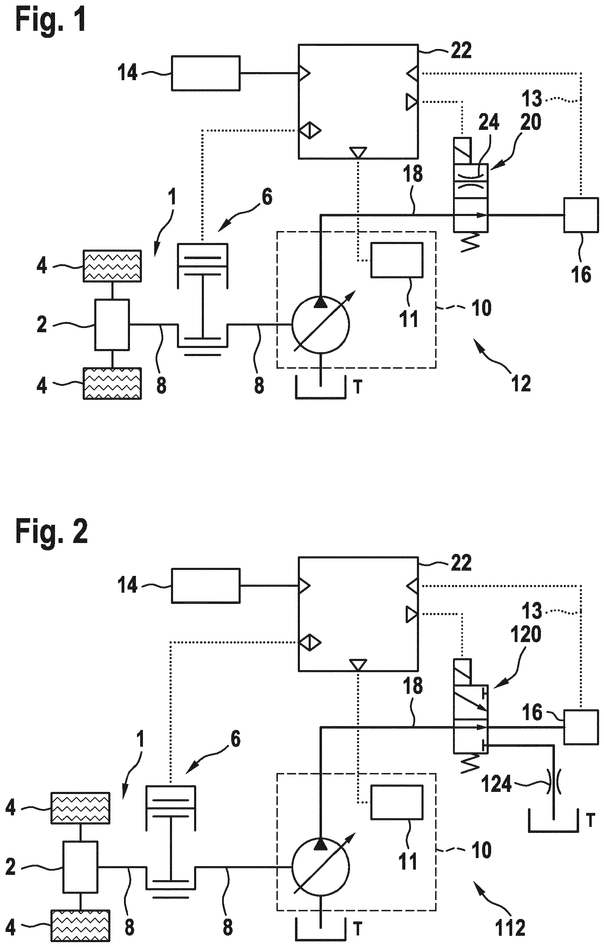

Figur 1 zeigt ein Schaltbild des erfindungsgemäßen Fahrantriebs gemäß einem ersten Ausführungsbeispiel. Der Fahrantrieb hat einen mechanischen Abtriebsstrang 1 mit einem Differentialgetriebe 2, über den Räder 4 einer Hinterachse einer (nicht näher gezeigten) mobilen Arbeitsmaschine angetrieben werden. Dazu dient ein Verbrennungsmotor 6, der als Dieselmotor ausgeführt ist, und der symbolisch durch einen Zylinder dargestellt ist. Über eine Kurbelwelle 8 des Verbrennungsmotors 6 ist eine Verstellpumpe 10 antreibbar, die aus einem Tank T Druckmittel ansaugt und zu einer Arbeitshydraulik 16 fördert. Die Arbeitshydraulik 16 hat verschiedene (nicht näher gezeigte) Verbraucher.

Die Verstellpumpe 10 hat einen elektrohydraulischen Druckregler 11, der von einer elektronischen Steuereinheit 22 angesteuert wird. Dabei hat die erfindungsgemäße hydraulische Anordnung 12 ein elektronisches Load-Sensing. Dies ist in Figur 1 insbesondere durch eine elektrische Lastdruckmeldeleitung 13 dargestellt, die den höchsten Lastdruck aller Verbraucher der Arbeitshydraulik 16 an die elektronische Steuereinheit meldet.

In einer Arbeitsleitung 18, die die Verstellpumpe 10 mit der Arbeitshydraulik 16 verbindet, ist ein Retarderventil 20 vorgesehen, das als 2/2-Wege-Schaltventil ausgebildet ist. In einer durch eine Feder vorgespannten (in Figur 1 gezeigten) Grundstellung ist das Retarderventil 20 offen, so dass die Verstellpumpe 10 die Verbraucher der Arbeitshydraulik 16 versorgen kann und die Retarderfunktion der hydraulischen Anordnung 12 deaktiviert ist. Über die elektronische Steuereinheit 22 kann ein elektrischer Aktor des Retarderventils 20 bestromt werden, womit dieses in eine Schaltstellung geschaltet wird, in der eine Retarderdrossel 24 in den Druckmittelströmungspfad der Arbeitsleitung 18 von der Verstellpumpe 10 zur Arbeitshydraulik 16 eingesetzt wird.

Im Retarderbetrieb der hydraulischen Anordnung 12 soll das Schleppmoment bzw. das Motorbremsmoment des Verbrennungsmotors 6 um ein Zusatzbremsmoment erhöht werden. Dieser Retarderbetrieb kann ausgelöst werden durch eine Bedienerschnittstelle 14, die über eine elektrische Leitung mit der Steuereinheit 22 verbunden ist. Alternativ kann auch ein (nicht gezeigter) Drehzahlsensor an der Kurbelwelle 8 des Verbrennungsmotors 6 angeordnet sein, der ein grenzwertiges Drehzahlsignal über eine (ebenfalls nicht gezeigte) elektrische Signalleitung an die Steuereinheit 22 übermittelt. Vorzugsweise wird das Drehzahlsignal über eine CAN Schnittstelle übermittelt. In diesen Fällen wird der Aktor des Retarderventils 20 bestromt, so dass die Retarderdrossel 24 an die Hochdruckseite der Verstellpumpe 10 angeschlossen wird und Leistung der Verstellpumpe 10 in Wärme umwandelt.

Figur 2 zeigt ein Schaltbild des erfindungsgemäßen Fahrantriebs gemäß einem zweiten Ausführungsbeispiel. Der Verbrennungsmotor 6, der mechanische Abtriebsstrang 1 mit dem Differentialgetriebe 2 und den Rädern 4 entspricht denjenigen des ersten Ausführungsbeispiels aus Figur 1. Die hydraulische Anordnung 112 hat lediglich folgende Unterschiede zur hydraulischen Anordnung 12 aus Figur 1: Das Retarderventil 120 ist als 3/2-Wege-Schaltventil ausgebildet und führt in seiner Schaltstellung den Druckmittelvolumenstrom der Verstellpumpe 10, der durch die Arbeitsleitung 18 strömt, nicht zur Arbeitshydraulik 16, sondern stattdessen zu einer Retarderdrossel 124, die baulich von dem Retarderventil 120 getrennt ist. Genauer gesagt ist die Retarderdrossel 124 stromab des Retarderventils 120 angeordnet.

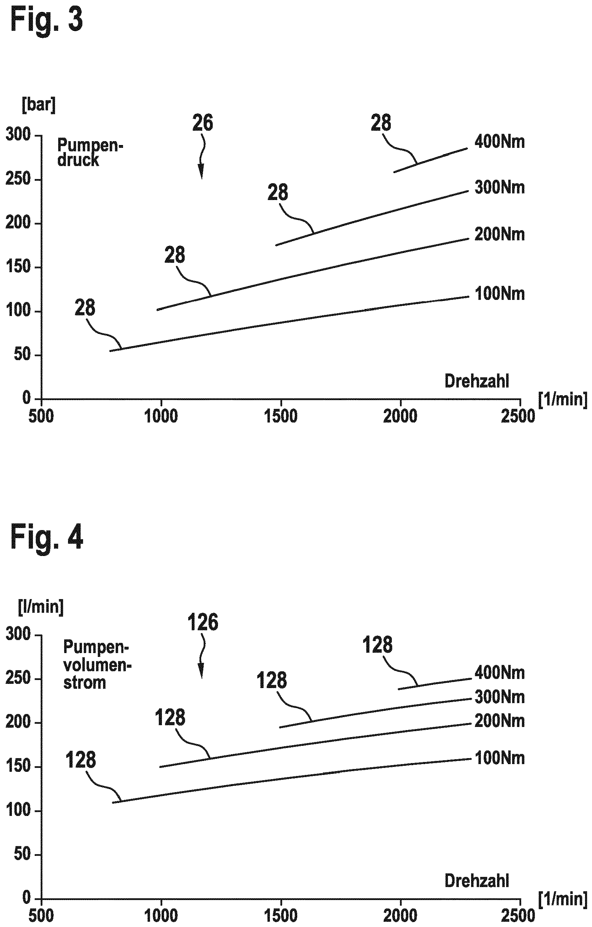

Figur 3 zeigt ein Kennfeld 26, das in der elektronischen Steuereinheit 22 der beiden Ausführungsbeispiele gemäß den Figuren 1 und 2 hinterlegt sein kann, um bei einem benötigten oder gewünschten Zusatzbremsmoment 28 in Abhängigkeit von einer aktuellen Drehzahl der Verstellpumpe 10 einen Pumpendruck zu ermitteln, der von dem elektrohydraulischen Druckregler 11 (gemäß den Figuren 1 und 2) eingestellt wird. Dabei werden beispielhaft vier benötigte oder gewünschte konstante Zusatzbremsmomente 28 betrachtet. Um das Zusatzbremsmoment 28 bei steigender Drehzahl zu realisieren, muss der Pumpendruck und damit der Volumenstrom über die Retarderdrossel 24; 124 steigen, damit gemäß der Leistungsbilanz das Zusatzbremsmoment 28 konstant bleibt.

Figur 4 zeigt ein Kennfeld 126, das in der elektronischen Steuereinheit 22 der beiden Ausführungsbeispiele gemäß den Figuren 1 und 2 hinterlegt sein kann, um bei einem benötigten oder gewünschten Zusatzbremsmoment 128 in Abhängigkeit von einer aktuellen Drehzahl der Verstellpumpe 10 einen Pumpenvolumenstrom zu ermitteln, der von einem alternativen elektrohydraulischen Volumenstromregler eingestellt wird. Dabei werden beispielhaft vier benötigte oder gewünschte konstante Zusatzbremsmomente 128 betrachtet. Um das Zusatzbremsmoment 128 bei steigender Drehzahl zu realisieren, muss der Volumenstrom über die Retarderdrossel 24; 124 steigen, damit gemäß der Leistungsbilanz das Zusatzbremsmoment 128 konstant bleibt.

Bei beiden Kennfeldern 26; 126 gemäß den Figuren 3 und 4 wurde die Leistungsgrenze einer spezifischen Verstellpumpe 10 beachtet.

Es kann angenommen werden, dass die Linien der Zusatzbremsmomente 28; 128 in den Figuren 3 und 4 im Wesentlichen gerade sind.

Offenbart sind eine hydraulische Anordnung mit einer Retarderfunktion und ein Fahrantrieb mit einer derartigen hydraulischen Anordnung. Für die Retarderfunktion ist eine Retarderdrossel vorgesehen, zu der eine Verstellpumpe Druckmittel fördert, wenn die hydraulische Anordnung im Retarderbetrieb ist. An der Verstellpumpe stützt sich ein Verbrennungsmotor im Motorbremsbetrieb ab. Damit wird das Motorbremsmoment des Verbrennungsmotors um ein Zusatzbremsmoment erhöht. Dabei ist die Retarderdrossel fix. Zur Verstellung oder Steuerung oder Regelung des Zusatzbremsmoments wird die Verstellpumpe im Retarderbetrieb verstellt oder gesteuert oder geregelt.

## Patentansprüche

1. Hydraulische Anordnung mit einer Verstellpumpe (10), die von einem Verbrennungsmotor (6) eines Fahrzeugs antreibbar ist, wobei an oder in einer Arbeitsleitung (18) der hydraulischen Anordnung ein Retarderventil (20; 120) angeordnet ist, über das von der Verstellpumpe (10) gefördertes Druckmittel zu einer Retarderdrossel (24; 124) führbar ist, wobei die hydraulische Anordnung in einem Retarderbetrieb eine hydraulische Bremsfunktion aufweist, **dadurch gekennzeichnet, dass** die Retarderdrossel (24; 124) fix ist, und dass ein Pumpendruck oder ein Pumpenvolumenstrom im Retarderbetrieb steuerbar oder regelbar ist.

2. Hydraulische Anordnung nach Anspruch 1, wobei das Retarderventil (20; 120) ein Schaltventil mit zwei Schaltstellungen ist.

3. Hydraulische Anordnung nach einem der vorhergehenden Ansprüche, wobei der Pumpendruck oder der Pumpenvolumenstrom im Retarderbetrieb elektronisch steuerbar oder regelbar ist.

4. Hydraulische Anordnung nach einem der vorhergehenden Ansprüche, mit einer elektronischen Steuereinheit (22).

5. Hydraulische Anordnung nach Anspruch 4, wobei in der elektronischen Steuereinheit (22) ein Kennfeld (26; 126) hinterlegt ist.

6. Hydraulische Anordnung nach Anspruch 5, wobei in dem Kennfeld (26; 126) der Pumpendruck oder der Pumpenvolumenstrom in Abhängigkeit von einer Drehzahl der Verstellpumpe (10) oder des Verbrennungsmotors (6) und in Abhängigkeit eines Zusatzbremsmomentes (28; 128) hinterlegt ist.

7. Hydraulische Anordnung nach einem der vorhergehenden Ansprüche, wobei die Retarderdrossel (24) in dem Retarderventil (20) angeordnet ist.

8. Hydraulische Anordnung nach einem der Ansprüche 1 bis 6, wobei die Retarderdrossel (124) stromab des Retarderventils (120) angeordnet ist.

9. Hydraulische Anordnung nach einem der vorhergehenden Ansprüche, wobei der Pumpendruck steuer- oder regelbar ist, und die Verstellpumpe (10) einen elektrohydraulischen Druckregler (11) aufweist, oder wobei der Pumpenvolumenstrom steuer- oder regelbar ist, und die Verstellpumpe (10) einen elektrohydraulischen Schwenkwinkelregler aufweist.

10. Hydraulische Anordnung nach einem der vorhergehenden Ansprüche mit einer zumindest einen Verbraucher aufweisenden Arbeitshydraulik (16), die von der Verstellpumpe (10) über die Arbeitsleitung (18) versorgbar ist.

11. Hydraulische Anordnung nach Anspruch 10 mit einem elektronischen Load Sensing (13).

12. Fahrantrieb für ein Fahrzeug mit einer hydraulischen Anordnung (12; 112) gemäß einem der vorhergehenden Ansprüche, wobei der Fahrantrieb einen Verbrennungsmotor (6) aufweist, an den die Verstellpumpe (10) der hydraulischen Anordnung (12; 112) gekoppelt ist.

13. Fahrantrieb nach Anspruch 12 mit einem hydrostatischen Abtriebsstrang, der einen geschlossenen hydraulischen Kreis und zumindest einen hydrostatischen Fahrmotor aufweist, der von einer Fahrpumpe des Fahrantriebs über den geschlossenen Kreis versorgbar ist.

14. Fahrantrieb nach Anspruch 12 mit einem mechanischen Abtriebsstrang (1).

## Claims

1. Hydraulic arrangement with a variable displacement pump (10) which can be driven by an internal combustion engine (6) of a vehicle, a retarder valve (20; 120) being arranged on or in a working line (18) of the hydraulic arrangement, via which retarder valve (20; 120) the pressure medium which is conveyed by the variable displacement pump (10) can be conducted to a retarder throttle (24; 124), the hydraulic arrangement having a hydraulic braking function in a retarder mode, **characterized in that** the retarder throttle (24; 124) is fixed, and **in that** a pump pressure or a pump volumetric flow can be controlled or regulated in the retarder mode.

2. Hydraulic arrangement according to Claim 1, the retarder valve (20; 120) being a switching valve with two switching positions.

3. Hydraulic arrangement according to either of the preceding claims, it being possible for the pump pressure or the pump volumetric flow to be controlled or regulated electronically in the retarder mode.

4. Hydraulic arrangement according to one of the preceding claims, with an electronic control unit (22).

5. Hydraulic arrangement according to Claim 4, a characteristic diagram (26; 126) being stored in the electronic control unit (22).

6. Hydraulic arrangement according to Claim 5, the pump pressure or the pump volumetric flow being stored in the characteristic diagram (26; 126) in a manner which is dependent on a rotational speed of the variable displacement pump (10) or of the internal combustion engine (6) and in a manner which is dependent on an additional braking torque (28; 128).

7. Hydraulic arrangement according to one of the preceding claims, the retarder throttle (24) being arranged in the retarder valve (20).

8. Hydraulic arrangement according to one of Claims 1 to 6, the retarder throttle (124) being arranged downstream of the retarder valve (120).

9. Hydraulic arrangement according to one of the preceding claims, it being possible for the pump pressure to be controlled or regulated, and the variable displacement pump (10) having an electrohydraulic pressure regulator (11), or it being possible for the pump volumetric flow to be controlled or regulated, and the variable displacement pump (10) having an electrohydraulic swash angle regulator.

10. Hydraulic arrangement according to one of the preceding claims with a working hydraulics system (16) which has at least one consumer and can be supplied by the variable displacement pump (10) via the working line (18) .

11. Hydraulic arrangement according to Claim 10 with an electronic load sensing system (13).

12. Traction drive for a vehicle with a hydraulic arrangement (12; 112) according to one of the preceding claims, the traction drive having an internal combustion engine (6), to which the variable displacement pump (10) of the hydraulic arrangement (12; 112) is coupled.

13. Traction drive according to Claim 12 with a hydrostatic drive train output section which has a closed hydraulic circuit and at least one hydrostatic traction motor which can be supplied by a traction pump of the traction drive via the closed circuit.

14. Traction drive according to Claim 12, with a mechanical drive train output section (1).

## Revendications

1. Agencement hydraulique, comprenant une pompe à cylindrée variable (10) qui peut être entraînée par un moteur à combustion interne (6) d'un véhicule, dans lequel, sur ou dans une conduite de travail (18) de l'agencement hydraulique, une soupape de ralentisseur (20 ; 120) est disposée par laquelle le fluide sous pression refoulé par la pompe à cylindrée variable (10) peut être amené à un étrangleur de ralentisseur (24 ; 124), l'agencement hydraulique présentant une fonction de freinage hydraulique en fonctionnement de ralentisseur, **caractérisé en ce que** l'étrangleur de ralentisseur (24 ; 124) est stationnaire, et **en ce qu'**une pression de pompe ou un débit de pompe peut être commandé(e) ou régulé(e) en fonctionnement de ralentisseur.

2. Agencement hydraulique selon la revendication 1, dans lequel la soupape de ralentisseur (20 ; 120) est une soupape de commutation à deux positions de commutation.

3. Agencement hydraulique selon l'une quelconque des revendications précédentes, dans lequel la pression de pompe ou le débit de pompe peut être commandé (e) ou régulé(e) électroniquement en fonctionnement de ralentisseur.

4. Agencement hydraulique selon l'une quelconque des revendications précédentes, comprenant une unité de commande électronique (22).

5. Agencement hydraulique selon la revendication 4, dans lequel un diagramme caractéristique (26 ; 126) est enregistré dans l'unité de commande électronique (22).

6. Agencement hydraulique selon la revendication 5, dans lequel dans le diagramme caractéristique (26 ; 126), la pression de pompe ou le débit de pompe est enregistré(e) en fonction d'une vitesse de rotation de la pompe à cylindrée variable (10) ou du moteur à combustion interne (6) et en fonction d'un couple de freinage auxiliaire (28 ; 128).

7. Agencement hydraulique selon l'une quelconque des revendications précédentes, dans lequel l'étrangleur de ralentisseur (24) est disposé dans la soupape de ralentisseur (20).

8. Agencement hydraulique selon l'une quelconque des revendications 1 à 6, dans lequel l'étrangleur de ralentisseur (124) est disposé en aval de la soupape de ralentisseur (120).

9. Agencement hydraulique selon l'une quelconque des revendications précédentes, dans lequel la pression de pompe peut être commandée ou régulée, et la pompe à cylindrée variable (10) présente un régulateur de pression électrohydraulique (11), ou dans lequel le débit de pompe peut être commandé ou régulé, et la pompe à cylindrée variable (10) présente un régulateur d'angle de pivotement électrohydraulique.

10. Agencement hydraulique selon l'une quelconque des revendications précédentes, comprenant un circuit hydraulique de travail (16) présentant au moins un consommateur et pouvant être alimenté par la pompe à cylindrée variable (10) par l'intermédiaire de la conduite de travail (18).

11. Agencement hydraulique selon la revendication 10, comprenant un dispositif d'appel de charge électronique (13) .

12. Dispositif de propulsion pour un véhicule comprenant un agencement hydraulique (12 ; 112) selon l'une quelconque des revendications précédentes, le dispositif de propulsion présentant un moteur à combustion interne (6) auquel est couplée la pompe à cylindrée variable (10) de l'agencement hydraulique (12 ; 112).

13. Dispositif de propulsion selon la revendication 12, comprenant un train de sortie hydrostatique qui présente un circuit hydraulique fermé et au moins un moteur de traction hydrostatique qui peut être alimenté par une pompe de roulement du dispositif de propulsion par l'intermédiaire du circuit fermé.

14. Dispositif de propulsion selon la revendication 12 avec un train de sortie mécanique (1).
